# EUROPÄISCHE PATENTSCHRIFT

(11) **EP 0 407 886 B1**
(45) Veröffentlichungstag und Bekanntmachung des Hinweises auf die Patenterteilung: **23.02.1994**
(21) Anmeldenummer: 90112816.5
(22) Anmeldetag: 05.07.1990
(51) Int. Cl.: B29C 49/22, B29C 67/20, B29C 51/20, B29D 22/00

(54) **Verfahren zur Herstellung von Kunststoff-Hohlkörpern mit geschäumten Wänden**
Method for producing plastic hollow parts with foamed walls
Procédé pour fabriquer des corps creux en matière plastique avec des parois moussées

(30) Priorität: 08.07.1989 DE 3922545
(43) Veröffentlichungstag der Anmeldung: 16.01.1991
(73) Patentinhaber: HOECHST AKTIENGESELLSCHAFT, 65926 Frankfurt am Main (DE)
(72) Erfinder: Löw, Wolfgang, D-6097 Trebur (DE)

(56) Entgegenhaltungen:
- DE-A- 2 350 355
- US-A- 3 901 958
- US-A- 4 115 491

## Beschreibung

Die Erfindung bezieht sich auf ein Verfahren zur Herstellung von Kunststoff-Hohlkörpern mit geschäumten Wänden, die aus mehreren Schichten unterschiedlicher Porosität bestehen.

Bekannt ist ein Verfahren zur Herstellung von Hohlkörpern, deren Wand teilweise aus einem geschäumten Kunststoff besteht, durch Extrusion eines wenigstens zwei Schichten aufweisenden schlauchförmigen Vorformlings. Wenigstens eine der Schicht besteht aus einem aufschäumbaren Kunststoff (vgl. EP 281971). In der Blasform, wird der Vorformling durch Innendruck aufgeweitet, wobei der Innendruck so bemessen ist, daß die aufgeschäumte Schicht nicht oder nur unwesentlich komprimiert wird. Da der Druck hierzu nur gering sein darf, ist seine Steuerung schwierig.

Es ist deshalb vorgeschlagen worden, Kunststoff-Hohlkörper mit geschäumten Wänden nicht durch Aufblasen des Vorformlings in der Blasform, sondern durch außen an den Vorformling angelegten Unterdruck zu formen. Dabei erhält man Hohlkörper mit glatter Innenoberfläche.

Für manche Anwendungen ist es indessen wünschenswert, Hohlkörper mit geschäumten Wänden mit rauher Innenoberfläche zu erhalten.

Es wurde gefunden, daß die Aufgabe gelöst werden kann, wenn der Vorformling in der Blasform nicht nur durch von außen einwirkenden Unterdruck aufgeweitet wird, sondern auch in seinem Inneren ein Unterdruck erzeugt wird.

Die Erfindung betrifft somit ein Verfahren zur Herstellung von Kunststoff-Hohlkörpern mit geschäumten Wänden, die aus mehreren Schichten unterschiedlicher Porosität bestehen, durch Extrusion von mindestens einem schäumbaren Thermoplasten auf einer Mehrschichtextrusionsanlage, Aufschäumen des mehrschichtigen Vorformlings in einer Form durch einen auf die Außenseite des Vorformlings einwirkenden Unterdruck, dadurch gekennzeichnet, daß innerhalb des Vorformlings ein Unterdruck erzeugt wird, welcher um 0,1 bis 0,8 bar höher ist als der Druck an der Außenseite des Hohlkörpers.

Für die Herstellung der geschäumten Kunststoff-Hohlkörper nach dem erfindungsgemäßen Verfahren eignen sich alle Thermoplaste, die sich durch Treibmittel schäumen lassen, beispielsweise LD-, MD- und HD-Polyethylen, Polypropylen, Polystyrol, Polyvinylchlorid, Polyacetal. Vorzugsweise werden LD-, MD- und HD-Polyethylen sowie Polypropylen eingesetzt, insbesondere Polypropylen.

Als Treibmittel für die Vorverschäumung eignen sich die für die vorgenannten Kunststoffe gebräuchlichen, beispielsweise diejenigen, welche sich bei Temperaturen von ungefähr 120 bis 230°C zersetzen. Darunter fallen die aromatischen Sulfohydrazide, die aliphatischen Sulfohydrazide und die Aralkylsulfohydrazide, wie z.B. Benzolsulfohydrazid, Toluol-bis-sulfohydrazid, Xylol-bis-sulfohydrazid, Biphenyl-bis-sulfohydrazid, p,p′-Oxi-bis-benzolsulfohydrazid, Methansulfohydrazid, Isobutansulfohydrazid, Octansulfohydrazid, α-Toluolsulfohydrazid, Xylol-bis-sulfohydrazid u. dgl.; die aromatischen Sulfosemicarbazide, die aliphatischen Sulfosemicarbazide und die Aralkylsulfosemicarbazide, wie z.B. Benzolsulfosemicarbazid, Toluol-bis-sulfosemicarbazid, Xylol-bis-sulofosemicarbazid, Biphenyl-bis-sulfosemicarbazid, p,p′-Oxibis-benzolsulfosemicarbazid, Methansulfosemicarbazid, Isobutansulfosemicarbazid, Octansulfosemicarbazid, α-Toluolsulfosemicarbazid, Xylol-bis-sulfosemicarbazid u. dgl.; N-Nitroso-Verbindungen, wie z.B. N,N′-Dimethyl-N,N′-dinitrosoterephthalamid und N,N′-Dinitroso-penta-methylentetramin und Azo-Verbindungen, wie Azodicarbonamid, ferner Systeme auf Basis Citronensäure/Bicarbonat. Als Treibmittel sind besonders p,p′-Oxi-bis-benzolsulfohydrazid, Azodicarbonamid und Mischungen davon sowie Citronensäure/Bicarbonat verwendbar. Die Menge des Treibmittels beträgt 0,1 bis 1,0, vorzugsweise 0,3 bis 0,8 %, berechnet als wirksame Substanz.

Neben dem Treibmittel enthalten die Kunststoffe bei Bedarf noch die üblichen Zusätze wie Licht- und Wärmestabilisatoren, Pigmente, Gleitmittel, Antistatika, Flammschutzmittel und dergleichen. Außerdem können die zu verwendenden Kunststoffe noch Füllstoffe in den üblichen und erforderlichen Mengen enthalten, beispielsweise Calciumcarbonat, Kreide, Talkum, Glaskugeln, Silikate von Magnesium und/oder Aluminium, Tonerde, Ruß, Holzmehl.

Die mit dem Treibmittel und eventuellen weiteren Zusätzen versehene Kunststoff-Formmasse wird in einem Extruder derart aufgeschmolzen, daß das in ihr enthaltende Treibmittel sich zersetzt und das sich bildende Gas in der Schmelze unter hohem Druck gelöst bleibt, so daß die Formmasse erst außerhalb des Extruders aufschäumt.

Für das erfindungsgemäße Verfahren werden mindestens zwei Extruder verwendet, welche die gleiche Kunststoff-Formmasse oder verschiedene Kunststoff-Formmassen aufschmelzen. Die Extruder fördern die Schmelzen in einen Mehrschichtkopf, wo sie in bekannter Weise zu einem mehrschichtigem Schlauch vereinigt werden. Der Masseschlauch wird abgelängt und die Vorformlinge in Formen, deren Hohlräume der Form der vorgesehenen Hohlkörper entspricht, eingeführt und durch Unterdruck an die Wand der Blasform angesaugt. Die Evakuierung des Zwischenraumes zwischen Vorformling und Blasforminnenwand wird durch den Schließvorgang der Blasform eingeleitet, gegebenenfalls zeitlich verzögert, um einen optimalen Unterdruck zu erhalten. Sobald der Vorformling an der Blasformwand anliegt, wird durch einen in den Blasformhohlraum hineinragenden Dorn das im Inneren des Vorformlings befindliche Gas abgesaugt. Dabei herrscht zwischen der Außenseite und der Innenseite des sich bildenden Hohlkörpers eine Druckdifferenz von 0,1 bis 0,8 bar. Dabei ist der Druck der Außenseite niedriger als an der Innenseite. Durch diese Druckdifferenz wird die noch deutlich heißere, niedrigviskose Schicht nach innen in den Körperhohlraum gesaugt, wobei sich die Schaumporen deutlich vergrößern. Durch gezielte Wahl des inneren Unterdruckes ist es sogar möglich, die inneren Schaumblasen zum Platzen zu bringen, so daß eine Innenporosität des geschäumten Hohlkörpers entsteht.

Die innere Oberfläche des Hohlkörpers ist rauh.

Der Vorteil des erfindungsgemäßen Verfahrens besteht darin, daß der sonst beim Extrusionsblasen vorhandene Blasdruck keine Verdichtung des Schaumes bewirkt, sondern daß die Schaumzellen durch die Druckdifferenz des Vakuums noch vergrößert werden.

Bei Verwendung der erfindungsgemäß hergestellten Hohlkörper als Luftführungen in Kraftfahrzeugen ist bei Wänden aus Schichten mit unterschiedlicher Dichte eine höhere Schalldämpfung zu beobachten als bei Wänden mit gleicher Dichte.

Außerdem ist bei rauhen Innenoberflächen bei gleichem Energieeinsatz die Luftgeschwindigkeit deutlich höher als bei solchen mit glatter Innenoberfläche (Reibung Luft-Luft gegen Reibung Material-Luft).

### Beispiel 1

Auf einer Mehrschichtextrusionsanlage wurde in einem Extruder ein handelsübliches Polypropylen mit einem MFI 230/5 von etwa 1,5 g/10 min, welches 2 % eines gebräuchlichen chemischen Treibmittels enthielt, extrudiert und in einem zweiten Extruder ein Polypropylen mit einem MFI 230/5 von ca. 30 g/10 min, enthaltend 2 % eines anderen gebräuchlichen chemischen Treibmittels. Das Aufschmelzen und Homogenisieren der Mischung erfolgte in den Extrudern unter Verwendung einer Kurzkompressionsschnecke, wobei die Temperaturen der Zylinderzonen vom Einzugstrichter bis zur Düse 220°/225°/200°/200°/180°/180°/180°C waren. Daraus resultierte eine Massetemperatur von 197°C. Die Extruder speisten einen Mehrschichtenkopf in der Weise, daß das Polypropylen mit der höheren Molmasse die Außenschicht des Vorformlings bildete.

Der extrudierte feinporöse Vorformling wurde portionsweise in eine Hohlkörper-Blasform eingebracht und die Form geschlossen. 1 bis 3 sec nach Beginn des Schließvorganges öffnete ein Ventil, welches die Form von einer Unterdruckleitung trennte, und der Vorformling wurde an die kalte Blasforminnenwand angesaugt. 3 bis 10 sec nach dem Öffnen des ersten Ventils öffnete ein zweites Ventil. Dadurch wurde der Druck im Inneren des Vorformlings verringert. Die Druckdifferenz betrug 0,5 bar. Der entstandene Hohlkörper hatte eine Wand mit einer feinporösen Außenschicht und einer grobporigen Innenschicht.

### Beispiel 2

Auf der gleichen Anlage wie in Beispiel 1 wurde ein dreischichtiger Vorformling hergestellt und zu einem Hohlkörper geformt. Der Schichtaufbau vor dem Aufschäumen war
- Außen Polypropylen: (MFI 230/5 ca 1,5 g/10 min, 2 % Treibmittel)
- Mitte Polypropylen: (MFI 230/5 ca 0,5 g/10 min, ohne Treibmittel)
- Innen Polypropylen: (MFI 230/5 ca 30 g/10 min, 2 % Treibmittel)
Der erhaltene Hohlkörper hatte eine dreischichtige Wand mit ähnlicher Porenstruktur wie in Beispiel 1, jedoch waren die beiden porösen Schichten durch eine kompakte Schicht voneinander getrennt. Im fertigen Hohlkörper hatten die Wandschichten eine Dichte von:
Außen 0,35 g/cm³,
Mitte 0,9 g/cm³ und
Innen 0,30 g/cm³.

## Patentansprüche

1. Verfahren zur Herstellung von Kunststoff-Hohlkörpern mit geschäumten Wänden, die aus mehreren Schichten unterschiedlicher Porosität bestehen, durch Extrusion von mindestens einem schäumbaren Thermoplasten auf einer Mehrschichtextrusionsanlage, Aufschäumen des mehrschichtigen Vorformlings in einer Form durch einen auf die Außenseite des Vorformlings einwirkenden Unterdruck, dadurch gekennzeichnet, daß, sobald der Vorformling an der Formwand anliegt, innerhalb des Vorformlings ein Unterdruck erzeugt wird, welcher um 0,1 bis 0,8 bar höher ist als der Druck an der Außenseite des Hohlkörpers.

## Claims

1. A method for producing hollow plastic parts with foamed walls comprising a plurality of layers of different porosity, by extrusion of at least one foamable thermoplastic on a multi-layer extrusion system, foaming the multi-layer preform in a mold by means of a subatmospheric pressure acting on the outside of the preform, wherein, as soon as the preform bears against the mold wall, a subatmospheric pressure is generated within the preform which is 0.1 to 0.8 bar higher than the pressure on the outside of the hollow part.

## Revendications

1. Procédé de fabrication de corps creux en matière plastique comportant des parois moussées, qui se compose de plusieurs couches de porosité différente, par extrusion d'au moins une matière thermoplastique qui peut être moussée sur les bases d'extrusion à plusieurs couches, moussage de l'ébauche à plusieurs couches dans un moule par l'intermédiaire d'une pression agissant sur le côté extérieur de l'ébauche, caractérisé en ce que, dès que l'ébauche repose sur le mur du moule, il est produit à l'intérieur de l'ébauche une pression supérieure de 0,1 à 0,8 bar à la pression agissant sur le côté extérieur du corps creux.
